# NEUE EUROPÄISCHE PATENTSCHRIFT

(11) **EP 1 273 786 B2**
(45) Veröffentlichungstag und Bekanntmachung des Hinweises auf die Entscheidung über den Einspruch: **10.03.2010**
(45) Hinweis auf die Patenterteilung: 28.12.2005
(21) Anmeldenummer: 02011006.0
(22) Anmeldetag: 17.05.2002
(51) Int. Cl.: F02M 25/07

(54) **Umschalteinrichtung zur Abgasrückführung bei einer Brennkraftmaschine**
Switching device for exhaust gas recirculation in an internal combustion engine
Dispositif de commutation pour la recirculation de gaz d'échappement d'un moteur à combustion interne

(30) Priorität: 07.07.2001 DE 10133182
(43) Veröffentlichungstag der Anmeldung: 08.01.2003
(73) Patentinhaber: Pierburg GmbH, 41460 Neuss (DE)
(72) Erfinder: Gerards, Hans, 52538 Gangelt (DE); Cebeci, Hayriye, 40577 Düsseldorf (DE); Käs, Gerhard, 50181 Bedburg (DE); Krien, Andreas, 50181 Bedburg (DE)
(74) Vertreter: Patentanwälte ter Smitten

(56) Entgegenhaltungen:
- EP-A- 0 887 541
- EP-A- 1 030 050
- DE-A- 19 636 806
- DE-A- 19 733 964
- DE-U- 29 611 034
- US-A- 4 147 141
- US-A- 5 740 785

## Beschreibung

Die Erfindung betrifft eine Umschalteinrichtung zur Abgasrückführung bei einer Brennkraftmaschine mit einer Umschaltklappe und einem Verteilerstück zur wahlweisen Einleitung des Abgases von einer Abgasleitung in einen Abgaskühler und in eine Bypaßleitung, die den Abgaskühler umgeht.

Eine derartige Umschalteinrichtung ist beispielsweise aus der EP-A1-1030050 bekannt. Die Umschalteinrichtung dieser Druckschrift besteht im wesentlichen aus einer Weiche, die in einem ersten Ausführungsbeispiel als Tellerventil und in einem zweiten Ausführungsbeispiel als herkömmliche Klappe ausgebildet ist. Diese Weiche gibt die Abgaseinleitung in den Abgaskühler frei und verschließt dabei die Bypaßleitung oder öffnet die Bypaßleitung und verschließt gleichzeitig die Abgaseinleitung. Eine Aufteilung in definierte Abgasteilströme ist mit dieser Umschalteinrichtung nicht möglich.

Hiervon ausgehend liegt der Erfindung daher die Aufgabe zugrunde, eine gattungsgemäße Umschalteinrichtung derart zu gestalten, daß auf kostengünstige Weise und bei geringen Einbaumaßen der oben genannte Nachteil vermieden wird.

Diese Aufgabe wird dadurch gelöst, daß das Umschaltelement ein Hohlkörper ist, der eine Drehachse aufweist, die ein Verschwenken des Hohlkörpers ermöglicht, derart, daß eine stufenlose Einstellung der Abgaseinleitung in den Abgaskühler und die Bypaßleitung gewährleistet ist. Mit einer derartigen Umschalteinrichtung wird auf kostengünstige Weise und bei geringem Bauraum eine dem Motor präzise anzupassende Abgasrückführung ermöglicht.

Gemäß einem ersten Ausführungsbeispiel verläuft die Drehachse konzentrisch zur Abgasleitung, wobei der Hohlkörper im wesentlichen als schief abgeschnittenes Zylinderrohr ausgeführt ist, das eine Abgaseintrittsöffnung in der Grundfläche und eine Abgasaustrittsöffnung im Bereich der Seitenfläche mit der längsten Mantellinie aufweist und im Verteilerstück angeordnet ist. Dabei ist es vorteilhaft, wenn das Verteilerstück im wesentlichen Y-förmig mit einem Abgaseinlaßbereich und zwei Abgasauslaßbereichen ausgeführt ist.

Gemäß einem zweiten Ausführungsbeispiel verläuft die Drehachse senkrecht zur Abgasleitung, wobei der Hohlkörper im wesentlichen als Drehzylinder mit einer Durchgangsöffnung ausgeführt ist und in der Abgasleitung angeordnet ist. Dabei ist es wiederum besonders vorteilhaft, wenn das Verteilerstück im wesentlichen V-förmig mit zwei Abgasauslaßbereichen ausgeführt ist, wobei ein Stegelement zwischen den Abgasauslaßbereichen als Anschlagstück für den Drehzylinder dient.

Gemäß einem weiteren Ausführungsbeispiel kann nun vorgesehen sein, daß in dem Drehzylinder ein Regelorgan drehbar angeordnet ist, derart, daß die Größe der Durchgangsöffnung veränderbar ist. Auf diese Weise ist eine besonders genaue Regelung des zurückzuführenden Abgases möglich. Dabei ist diese Ausführungsform konstruktiv besonders einfach zu gestalten, wenn das Regelorgan die gleiche Drehachse aufweist wie der Drehzylinder.

Ausführungsbeispiele der Erfindung sind in der Zeichnung dargestellt und werden nachfolgend beschrieben. Hierbei zeigt:
- Figur 1: eine schematische Darstellung der Abgasrückführung einer Brennkraftmaschine,
- Figur 2: eine Schnittansicht einer ersten Ausführungsform einer Umschalteinrichtung,
- Figur 3: eine Draufsicht auf das Umschaltelement aus Figur 2,
- Figur 4: eine Schnittansicht einer zweiten Ausführungsform einer Umschaltenrichtung,
- Figur 5: eine Seitenansicht des Umschaltelementes aus Figur 4 und.
- Figur 6: eine Schnittansicht einer dritten Ausführungsform einer Umschalteinrichtung.

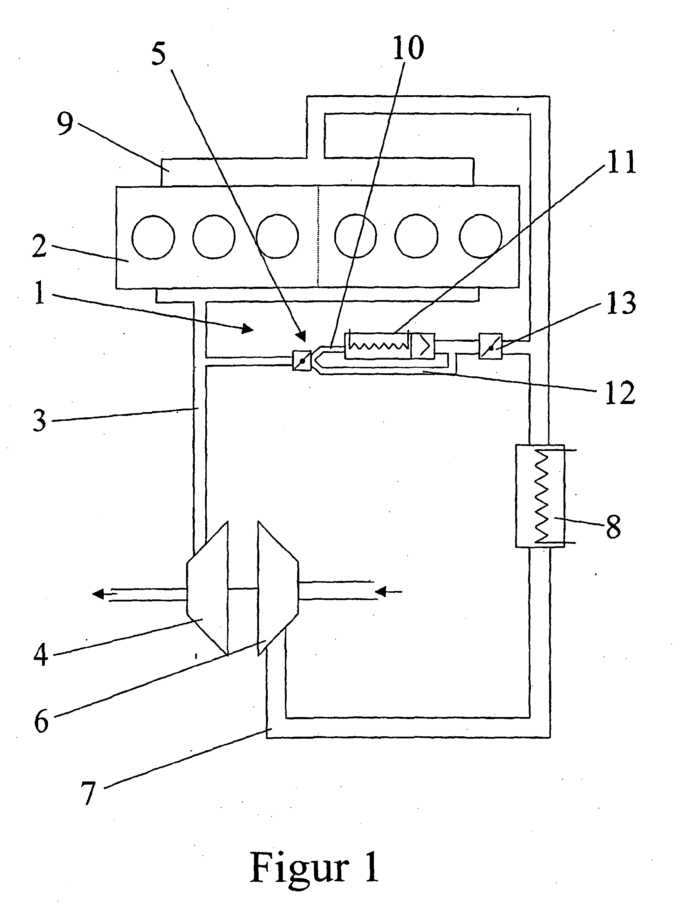

Figur 1 zeigt eine Abgasrückführung 1 für eine Brennkraftmaschine 2. Von der Brennkraftmaschine 2 zweigt eine Abgasleitung 3 ab, die zum einen Abgas über eine Turbine 4 nach außen leitet und zum anderen, wie unten beschrieben, Abgas über eine Umschalteinrichtung 5 zur Abgasrückführung zurück zur Brennkraftmaschine 2 leitet. Durch die Turbine 4 wird ein Verdichter 6 angetrieben, der Umgebungsluft verdichtet und einer Ladeluftleitung 7, die einen Ladeluftkühler 8 aufweist, zuführt. Die Ladeluftleitung 7 führt dann zur Ladeluftverteilerleiste 9 der Brennkraftmaschine 2.

Die Abgasleitung 3 mündet, wie oben schon angedeutet, zu einer Umschalteinrichtung 5, die es ermöglicht, das Abgas durch eine Abgaskühlerleitung 10 über einen Abgaskühler 11 oder durch eine Bypaßleitung 12 zu einem Abgasrückführventil 13 zu führen, das auf bekannte Weise die Einleitung von Abgas in die Ansaugluft der Verbrennungsmaschine 2 regelt.

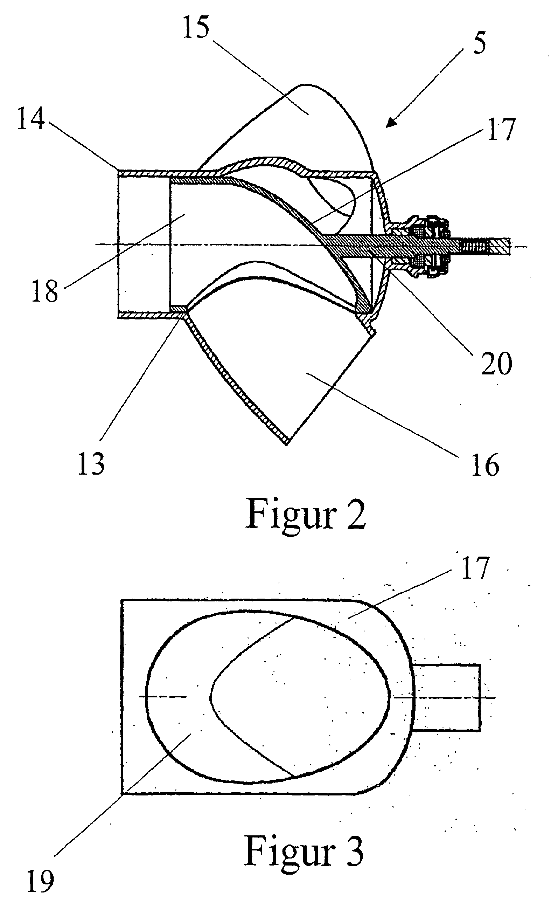

Figur 2 zeigt eine Schnittansicht eines ersten Ausführungsbeispiels der erfindungsgemäßen Umschalteinrichtung 5. Diese Umschalteinrichtung 5 besteht im wesentlichen aus einem Verteilerstück 13 mit einem Abgaseinlaßbereich 14, der mit der Abgasleitung 3 verbunden ist und zwei Abgasauslaßbereiche 15, 16, die jeweils mit der Abgaskühlerleitung 10 bzw. der Bypaßleitung 12 verbunden sind und einem als Hohlkörper ausgeführten Umschaltelement 17. Das Verteilerstück 13 ist vorteilhafterweise Y-förmig ausgebildet. Der Hohlkörper 17 besitzt im wesentlichen die Form eines schief abgeschnittenen Zylinderrohres mit einer Abgaseintrittsöffnung 18 in der Grundfläche und einer Abgasaustrittsöffnung 19 (s. Figur 3) im Bereich der Seitenfläche mit der längsten Mantellinie des schief abgeschnittenen Zylinderrohres 17. Der Hohlkörper 17 kann auf bekannte Weise durch eine Drehachse 19, die durch das Verteilerstück 13 hindurchreicht und konzentrisch zur Abgasleitung 3 verläuft, angetrieben werden.

Das als schief abgeschnittenes Zylinderrohr 17 ausgeführte Umschaltelement ist in einer Seitenansicht in Figur 3 dargestellt. Deutlich zu erkennen ist hier die Abgasaustrittsöffnung 19 im Bereich der Seitenfläche mit der längsten Mantellinie.

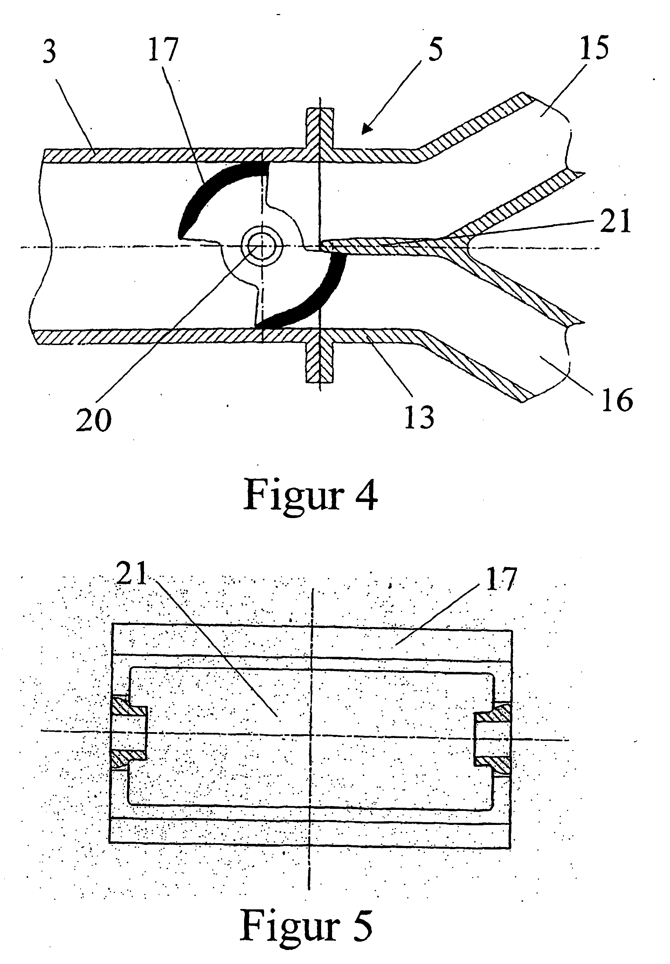

Figur 4 zeigt die Schnittansicht eines zweiten Ausführungsbeispieles der erfindungsgemäßen Umschalteinrichtung 5. In diesem Ausführungsbeispiel ist das als Hohlkörper ausgestaltete Umschaltelement 17 als Drehzylinder ausgeführt. Der Drehzylinder 17 weist eine Durchgangsöffnung 21 (s. Figur 5) auf, die je nach Stellung des Drehzylinders das Abgas der Abgasleitung 3 in die Abgaskühlerleitung 10 und/oder die Bypaßleitung 12 führt. Die Drehachse 20 des Drehzylinders 17 verläuft beim vorliegenden Ausführungsbeispiel senkrecht zur Abgasleitung. Desweiteren ist es möglich, den Drehzylinder 17 direkt in der Abgasleitung 3 anzubringen. Das Verteilerstück 13 ist im vorliegenden Fall V-förmig ausgebildet und besitzt zwei Abgasauslaßbereiche 15 und 16, die - wie oben bereits beschrieben - mit der Abgaskühlerleitung 10 bzw. der Bypaßleitung 12 verbunden sind. Die Abgasauslaßbereiche 15, 16 werden im vorliegenden Ausführungsbeispiel durch einen Steg 22 getrennt, der auch als Anschlagstück für den Drehzylinder 17 dient, um den Drehzylinder 17 in einer definierten Endstellung festzulegen.

Figur 5 zeigt den Drehzylinder 17 noch einmal in einer Einzelansicht. Deutlich zu erkennen ist die Durchgangsöffnung 21.

Figur 6 zeigt nun eine weitere Ausführungsform der erfindungsgemäßen Umschalteinrichtung. Hierbei ist in dem Drehzylinder 17 ein Regelorgan 23, das als Zylindersegment ausgeführt sein kann angeordnet. Wie dargestellt kann auf diese Weise die Größe der Durchgangsöffnung 21 verändert werden. Eine besonders einfache Ausführungsform liegt vor, wenn das Regelorgan 23 die gleiche Drehachse 20 aufweist wie der Drehzylinder 17.

## Patentansprüche

1. Umschalteinrichtung zur Abgasrückführung bei einer Brennkraftmaschine mit einem Umschaltelement und einem Verteilerstück zur wahlweisen Einleitung des Abgases von einer Abgasleitung in einen Abgaskühler und in eine Bypassleitung, die den Abgaskühler umgeht, wobei das Umschaltelement (17) ein Hohlkörper ist, der eine Drehachse (19, 20) aufweist, die ein Verschwenken des Hohlkörpers (17) ermöglicht, derart, daß eine stufenlose Einstellung der Abgaseinleitung in den Abgaskühler (11) und die Bypassleitung (12) gewährleistet ist, **dadurch gekennzeichnet, daß** die Drehachse (19) konzentrisch zur Abgasleitung (3) verläuft, wobei der Hohlkörper (17) im wesentlichen als schief abgeschnittenes Zylinderrohr ausgeführt ist, das eine Abgaseintrittsöffnung (18) in der Grundfläche und eine Abgasaustrittsöffnung (19) im Bereich der Seitenfläche mit der längsten Mantellinie aufweist und im Verteilerstück (13) angeordnet ist.

2. Umschalteinrichtung nach Anspruch 1, **dadurch gekennzeichnet, daß** das Verteilerstück (13) im wesentlichen Y-förmig mit einem Abgaseinlaßbereich (14) und zwei Abgasauslaßbereichen (15, 16) ausgeführt ist.

3. Umschalteinrichtung zur Abgasrückführung bei einer Brennkraftmaschine mit einem Umschaltelement und einem Verteilerstück zur wahlweisen Einleitung des Abgases von einer Abgasleitung in einen Abgaskühler und in eine Bypassleitung, die den Abgaskühler umgeht, wobei das Umschaltelement (17) ein Hohlkörper ist, der eine Drehachse (19, 20) aufweist, die ein Verschwenken des Hohlkörpers (17) ermöglicht, derart, daß eine stufenlose Einstellung der Abgaseinleitung in den Abgaskühler (11) und die Bypassleitung (12) gewährleistet ist,
die Drehachse (20) senkrecht zur Abgasleitung verläuft, wobei der Hohlkörper (17) im wesentlichen als Drehzylinder mit einer Durchgangsöffnung (21) ausgeführt ist und in der Abgasleitung (3) angeordnet ist,
das Verteilerstück (13) im wesentlichen V-förmig mit zwei Abgasauslaßbereichen (15, 16) ausgeführt ist, **dadurch gekennzeichnet, daß** ein Stegelement (22) zwischen den Abgasauslaßbereichen (15, 16) als Anschlagstück für den Drehzylinder (17) dient.

4. Umschalteinrichtung nach Anspruch 3, **dadurch gekennzeichnet, daß** in dem Drehzylinder (17) ein Regelorgan (23) drehbar angeordnet ist, derart, daß die Größe der Durchgangsöffnung (21) veränderbar ist.

5. Umschalteinrichtung nach Anspruch 3 oder 4, **dadurch gekennzeichnet, daß** das Regelorgan (23) die gleiche Drehachse (20) aufweist wie der Drehzylinder (17).

## Claims

1. Changeover device for exhaust gas recirculation in an internal combustion engine comprising a changeover element and a distributor piece for the selective introduction of the exhaust gas from an exhaust pipe into an exhaust gas cooler and into a bypass line that bypasses the exhaust gas cooler, whereby the changeover element (17) is a hollow body, which has an axis of rotation (19, 20) that enables a swivelling of the hollow body (17) in such a way that an infinitely variable adjustment of the introduction of exhaust gas into the exhaust gas cooler (11) and the bypass line (12) is guaranteed,
**characterized in that** the axis of rotation (19) extends concentrically with the exhaust gas pipe (3), wherein the hollow body (17) is designed substantially as an obliquely cut cylindrical pipe, which has an exhaust gas inlet opening (18) in the base and an exhaust gas outlet opening (19) in the region of the lateral surface with the longest surface line and is disposed in the distributor piece (13).

2. Changeover device according to claim 1,
**characterized in that** the distributor piece (13) is of a substantially Y-shaped design having one exhaust gas inlet region (14) and two exhaust gas outlet regions (15,16).

3. Changeover device for exhaust gas recirculation in an internal combustion engine comprising a changeover element and a distributor piece for the selective introduction of the exhaust gas from an exhaust pipe into an exhaust gas cooler and into a bypass line that bypasses the exhaust gas cooler, whereby the changeover element (17) is a hollow body, which has an axis of rotation (19,20) that enables a swivelling of the hollow body (17) in such a way that an infinitely variable adjustment of the introduction of exhaust gas into the exhaust gas cooler (11) and the bypass line (12) is guaranteed, the axis of rotation (20) extends at right angles to the exhaust pipe, wherein the hollow body (17) is designed substantially as a rotary cylinder having a through-opening (21) and is disposed in the exhaust pipe (3), the distributor piece (13) is of a substantially V-shaped design having two exhaust gas outlet regions (15,16),
**characterized in that** a web element (22) between the exhaust gas outlet regions (15,16) serves as a stop piece for the rotary cylinder (17).

4. Changeover device according to claim 3 **characterized in that** in the rotary cylinder (17) a control device (23) is rotatably disposed in such a way that the size of the through-opening (21) is variable.

5. Changeover device according to claim 3 or 4, **characterized in that** the control device (23) has the same axis of rotation (20) as the rotary cylinder (17).

## Revendications

1. Dispositif de commutation pour le recyclage de gaz d'échappement d'un moteur à combustion interne, comprenant un élément de commutation et un répartiteur pour l'arrivée sélective de gaz d'échappement d'une conduite de gaz d'échappement dans un refroidisseur de gaz et dans une conduite de dérivation qui contourne le refroidisseur de gaz d'échappement, le dispositif de commutation (17) est un corps creux qui présente un axe de rotation (19,20) permettant un pivotement du corps creux (17) de telle sorte qu'un réglage continu de l'arrivée de gaz d'échappement dans le refroidisseur de gaz (11) et dans la conduite de dérivation (12) est garanti.
**caractérisé en ce que** l'axe de rotation (19) s'étend de façon concentrique au collecteur d'échappement (3), le corps creux (17) étant réalisé essentiellement sous forme de tube cylindrique sectionné obliquement, qui présente une ouverture d'admission de gaz d'échappement (18) dans la surface de bas et une ouverture de sortie de gaz d'échappement (19) dans la zone de la surface latérale ayant la génératrice la plus longue et est disposé dans le répartiteur (13).

2. Dispositif de commutation suivant la revendication 1,
**caractérisé en ce que** le répartiteur (13) est configuré essentiellement en Y avec une zone d'admission de gaz d'échappement (14) et deux zones de sortie de gaz d'échappement (15,16).

3. Revendications
Dispositif de commutation pour le recyclage de gaz d'échappement d'un moteur à combustion interne, comprenant un élément de commutation et un répartiteur pour l'arrivée sélective de gaz d'échappement dans un refroidisseur de gaz et dans une conduite de dérivation qui contourne le refroidisseur de gaz d'échappement, dispositif de commutation (17) est un corps creux qui présente un axe de rotation (19,20) permettant un pivotement dur corps creux (17) de telle sorte qu'un réglage continu de l'arrivée de gaz d'échappement dans le refroidisseur de gaz (11) et dans la conduite de dérivation (12) est garanti, l'axe de rotation (20) s'étend perpendiculairement au collecteur d'échappement, le corps creux (17) étant essentiellement réalisé sous forme de cylindre rotatif avec une ouverture de passage (21) et étant disposé dans la conduite de gaz d'échappement (3), le répartiteur (13) est réalisé essentiellement en V avec deux zones de sortie de gaz d'échappement (15,16),
**caractérisé en ce que** un élément de traverse (22) entre les zones de sortie de gaz d'échappement (15,16) servant de butée pour le cylindre rotatif (17).

4. Dispositif de commutation suivant la revendication 3,
**caractérisé en ce qu'**un organe de réglage (23) est monté tournant dans le cylindre rotatif (17), de telle sorte que la taille de l'ouverture de passage (21) est modifiable.

5. Dispositif de commutation suivant l'une des revendications 3 et 4,
**caractérisé en ce que** l'organe de réglage (23) présente le même axe de rotation (20) que le cylindre rotatif (17).
